# EUROPÄISCHE PATENTSCHRIFT

(11) **EP 0 595 074 B1**
(45) Veröffentlichungstag und Bekanntmachung des Hinweises auf die Patenterteilung: **20.01.1999**
(21) Anmeldenummer: 93116115.2
(22) Anmeldetag: 06.10.1993
(51) Int. Cl.: B23Q 3/06

(54) **Klemmspannvorrichtung**
Clamping device
Dispositif de serrage

(30) Priorität: 30.10.1992 DE 4236670
(43) Veröffentlichungstag der Anmeldung: 04.05.1994
(73) Patentinhaber: DE-STA-CO Metallerzeugnisse GmbH, D-61449 Steinbach/Ts. (DE)
(72) Erfinder: Schauss, Peter, D-65439 Flörsheim (DE); Buchenau, Michel, D-64839 Münster 2 (DE)
(74) Vertreter: Wolf, Günter, Dipl.-Ing.

(56) Entgegenhaltungen:
- DE-U- 8 707 773
- US-A- 4 667 998
- US-A- 5 118 088

## Beschreibung

Die Erfindung betrifft ein Klemmspannsystem gemäß Oberbegriff des Patentanspruches 1.

Dieser Oberbegriff geht aus von der US-A-5,118,088, gemäß der in einem gabelförmigen Klemmbackenhalter ein in dessen Längserstreckung hin und her bewegliches Stellglied für die Relativbewegung von zwei Klemmbackenträgern in Klemm- und Öffnungsstellung zueinander angeordnet ist, wobei in den beiden Schenkeln des Klemmbackenhalters zur Anbringung des entweder aus zwei beweglichen Klemmbackenträgern oder aus einem beweglichen und einem feststehenden Klemmbackenträger gebildeten Klemmbackenträgerpaares mehrere in den Schenkeln quer zueinander fluchtende Bohrungen beidseitig zur Längsmitte dieser Klemmspannvorrichtung angeordnet sind. Mit dieser vorbekannten Klemmspannvorrichtung lassen sich zwar die Klemmbackenträger untereinander und auch in Bezug auf den Klemmbackenträger in unterschiedlicher Weise zuordnen, wofür jedoch eine beträchtliche Anzahl von Bohrungen vorgesehen sein muß.
Zum allgemeinen, technologischen Hintergrund ist zu verweisen auf die US -A-4,667,998, bei deren Klemmspannvorrichtung es allein um eine besondere Gestaltung des Antriebes geht, und ferner auf die DE-U-87 07 773.6, deren Klemmvorrichtung derart gestaltet ist, daß deren eine Klemmbacke winkeleinstell-und fixierbar ist. Derartige Klemmvorrichtungen, die auch als Klemmgreifer bezeichnet werden, dienen insbesondere dazu, bspw. Bleche oder sonstige Teile in Press-, Verformungs-, verschweiß- und Stanzanlagen lösbar, aber ausreichend fest verspannt zu fixieren, was zwischen den beiden Klemmbacken erfolgt, von denen die bewegliche in der Regel mit Fixierungsspitzen ausgestattet ist, während die andere, mit dem Betätigungseinrichtungshalter fest verbundene, in geeigneter Weise auf einer zum Bearbeitungsbereich gehörenden Auflage fixiert wird. Bei den für derartige Vorrichtungen benutzten Betätigungseinrichtungen handelt es sich in der Regel um Stellzylinder, deren das Stellglied bildende Kolbenstange am freien Ende in geeigneter Weise mit der beweglichen Klemmbacke gekoppelt bzw. in Wirkverbindung bringbar ist (siehe US-A-36 30 391 oder EP-A-01 25 819).

Für die in vorerwähnten Anlagen meist in größerer Anzahl zu installierenden Vorrichtungen ist es wünschenswert, bspw. mit Rücksicht auf unterschiedlich orientierte Installations-stellen, unterschiedliche Zugriffsrichtungen für die Klemmbacken aber auch unterschiedlich verglegte Betriebsmittelzuleitungen für die Betätigungsglieder, diesen unterschiedlichen Installationserfordernissen Rechnung tragen zu können. Mit den bekannten und oben erwähnten Vorrichtungen ist dies nicht ohne weiteres möglich, d.h., der Hersteller wäre praktisch gezwungen, solche Vorrichtungen unter Beibehaltung ihres grundsätzlichen Konstruktionsprinzips an die jeweiligen Installationserfordernisse angepaßt zu konstruieren und zu fertigen, um bspw. Vorrichtungen anbieten zu können, die in Bezug auf den Klemmbackenhalter nach oben oder nach unten greifen können, aber auch geradeaus nach vorn oder die bspw. mit einer Festbacke und einer beweglichen Klemmbacke arbeiten, wobei es auch hierbei wieder erforderlich sein kann, daß die Festbacke nach oben, nach unter oder nach vorn weisen soll mit entsprechender Zuordnung der beweglichen Klemmbacke.

Der Erfindung liegt, ausgehend von einer Klemmspannvorrichtung der eingangs genannten Art, die Aufgabe zugrunde, ein Klemmspannsystem zu schaffen und derart auszubilden, daß am Klemmbackenhalter, ohne den Halter verändern zu müssen, die Klemmbacken in unterschiedlichen Richtungen orientiert und auch unterschiedlich gestaltete Klemmbacken am Klemmbackenhalter angeordnet werden können. Diese Aufgabe ist mit einem Klemmspannsystem nach der Erfindung durch die im Patentanspruch 1 angeführten Merkmale gelöst. Vorteilhafte Ausgestaltungen, insbesondere was die Klemmbacken selbst betrifft, ergeben sich nach den abhängigen Ansprüchen 2 bis 9.
Durch diese erfindungsgemäße Ausbildung des Klemmspannsystems, ergibt sich eine außerordentliche Variationsbreite bzgl. der Zuordnung der Klemmbackenträger zum Klemmbackenhalter, verbunden mit dem Vorteil für den Hersteller, daß, ohne den Klemmbackenhalter selbst verändern zu müssen, gleich oder unterschiedlich gestaltete Klemmbackenträger angebracht werden können, daß Klemmbackenträgerpaarungen vorgesehen werden können, von denen die eine als Festbackenträger und die andere als bewegliche Backenträger wirkt, wobei im letzteren Fall zusätzlich die Möglichkeit besteht, bei entsprechender Formanpassung der beweglichen Backenträgers die Festklemmbacke an allen drei Freiseiten des Klemmbackenhalters anordnen zu können. Dazu bedarf es nun nicht etwa einer Vielzahl unterschiedlich gestalteter Klemmbackenträger, sondern man kommt, was noch näher erläutert wird, praktisch mit nur drei Klemmbackenträgertypen aus.

Davon ausgehend, ist vorteilhaft der eine Klemmbackenträger als Festklemmbacke in Form eines Winkelstückes ausgebildet, in dessen Befestigungsschenkel die zur Lagerbohrung fluchtende Bohrung und beidseitig neben dieser die Bolzendurchgriffe in Form von Bohrungen angeordnet sind, deren Abstand zueinander den Abständen der Bohrungen im Klemmbackenhalter entspricht. Dadurch kann diese Festklemmbacke aufgrund des am Klemmbackenhalter angeordneten Bohrungs- bzw. Lochrasters in vier unterschiedlichen Stellungen angeordnet werden.

Um den beweglichen Klemmbackenträger sowohl mit einem entsprechenden aber auch mit einem Festbackenträger gepaart am Klemmbackenhalter anordnen zu können, ist der bewegliche Klemmbackenträger in Form einer Gabel mit die Klemmbacke tragenden Fortsatz ausgebildet, wobei die Mittel zur kraft- und/oder formschlüssigen Wirkverbindung mit dem Stellglied in Form von Enden der Gabelschenkel als Stellgliedauflaufflächen ausgebildet sind und in einem Schenkel die zur Lagerbohrung des Halters fluchtende Bohrung angeordnet ist. Bei Anordnung des Festbackenträgers quer zur durch die mittige Lagerbohrung laufenden Längsmittellinie des Klammbarkenhalters ändert sich am beweglich zuzuordnenden Klemmbackenhalter nur insofern etwas, als dabei der die Klemmbacke tragende Fortsatz parallel oder geneigt zur Verbindungslinie der beiden klemmbackenseitigen Bohrungen angeordnet ist, und zwar parallel oder geneigt in dem Sinne, daß der Fortsatz in Richtung des Festbackenträgers orientiert ist.

Die Variationsbreite bzgl. der Zuordnung der Klemmbacken zum Klemmbackenhalter ist außerdem nicht auf eine lediglich kraftschlüssige Verbindung zwischen Klemmbackenträger(n) und Stellglied beschränkt, sondern kann auch dann erreicht werden, wenn eine formschlüssige Verbindung bestehen soll. Hierfür ist der bewegliche Klemmbackenträger im Form einer Gabel mit die Klemmbacke tragenden Fortsatz ausgebildet, deren Schenkel den zum Ende des Stellgliedes hin offenen und kreisbogenförmigen Bolzendurchgriff begrenzen, wobei in einem Schenkel die zur Lagerbohrung des Halters fluchtende Bohrung angeordnet und der andere Schenkel durch ein Zwischenglied mit dem Ende des Stellgliedes verbunden ist. Im Grunde kann auch hier die vorerwähnte Ausführungsform des beweglichen Klemmbackenträgers beibehalten werden, d.h., lediglich im einem Schenkel der Gabel ist eine Bohrung anzuordnen, um dort in geeigneter Weise das dann notwendige Zwischenglied anlenken zu können.

Das erfindungsgemäße Klemmspannsystem wird nachfolgend an Hand der zeichnerischen Darstellung von Ausführungsbeispielen näher erläutert.

Es zeigt
- Fig. 1: in Seitenansicht den Klemmbackenhalter ohne Klemmbackenträger mit einem geschnitten dargestellten Antrieb in Form eines Pneumatikzylinders;
- Fig. 2: den Klemmbackenhalter in Vorderansicht;
- Fig. 3, 3A-5: verschiedene Ausführungsformen von Klemnbackenträgern, wobei Fig. 3A eine Ansicht des Klemmbackenträgers von oben darstellt;
- Fig. 6 - 8: in Seitenansicht das System mit jeweils unterschiedlichen und unterschiedlich orientiert angeordneten Klemmbackenträgerpaarungen und
- Fig. 9, 10: in Draufsicht und teilweise geschnitten besondere und bevorzugte Ausführungsformen des Klemmspannsystems.

Das Klemmspannsystem besteht grundsätzlich aus einem gabelförmigen Klemmbackenhalter 1, an dem ein in Längserstreckung des Klemmbackenhalters 1 hin und her bewegliches Klemmbackenstellglied 2 für die Relativbewegung der Klemmbackenträger 3, 4 in Klemm- und Öffnungsstellung zueinander angeordnet ist.

Für dieses System und alle nachfolgend zu beschreibenden Ausführungsformen ist nun wesentlich, daß in den Schenkeln 5 des Klemmbackenhalters 1 in Querfluchtung zueinander je eine Lagerbohrung 6 und je vier weitere Bohrungen 7 mit ihren Zentren Z auf den Ecken E eines Quadrates Q angeordnet und die beiden Lagerbohrungen 6 auf der jeweiligen Verbindungslinie L der beiden klemmbackenseitigen Bohrungen 7' mittig angeordnet sind und daß die beiden am Klemmbackenhalter 1 angeordneten Klemmbackenträger 3, 4 eine zur Lagerbohrung 6 fluchtende Bohrung 6' und der mindestens eine bewegliche Klemmbackenträger 3 Mittel 8 zur kraft- und/oder formschlüssigen Wirkverbindung mit dem Stellglied 2 aufweisen.

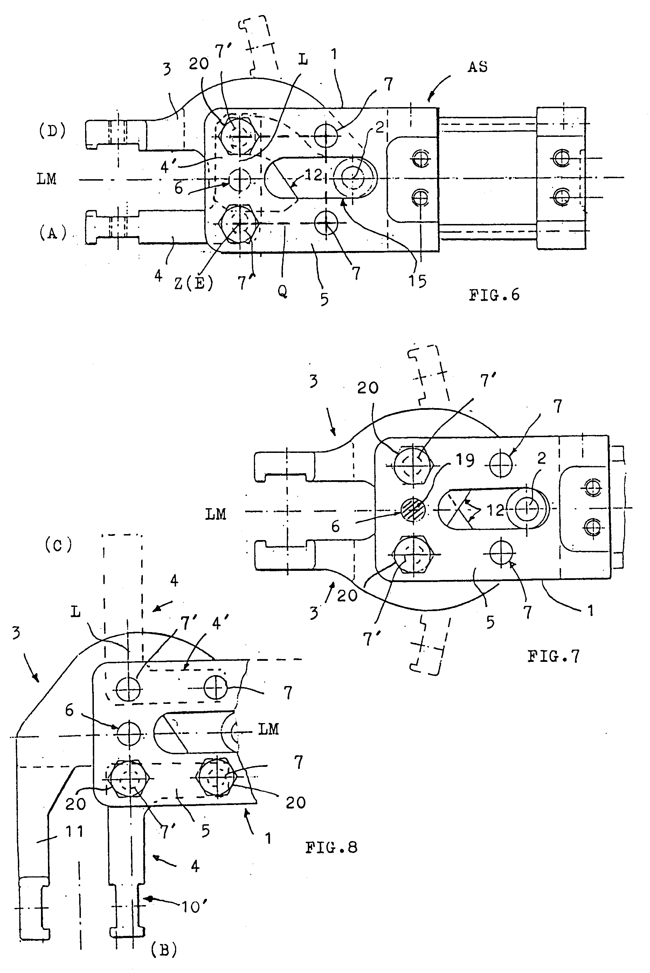

Klemmbackenträgerpaarungen aus einer Festbacke und einer beweglichen Klemmbacke sind in den Fig. 6 und 8 verdeutlicht, wobei die Anordnungsmöglichkeiten des fest anzuordnenden Klemmbackenträgers 4 gestrichelt angedeutet sind, der gemäß Fig. 5 in Form eines Winkelstückes ausgebildet ist, in dessen Befestigungsschenkel 4' die zur Lagerbohrung 6 fluchtende Bohrung 6' und beidseitig neben dieser Bohrungen 8' angeordnet sind, deren Abstand zueinander den Abständen der Bohrungen 6, 7' im Klemmbackenhalter 1 entspricht. In Rücksicht auf die unterschiedlichen Anordnungsmöglichkeiten (A - D) des Klemmbackenträgers 4 ist dieser, wie in Fig. 5 dargestellt, beidseitig mit Klemmbackeneinsatz-ausnehmungen 10' versehen.

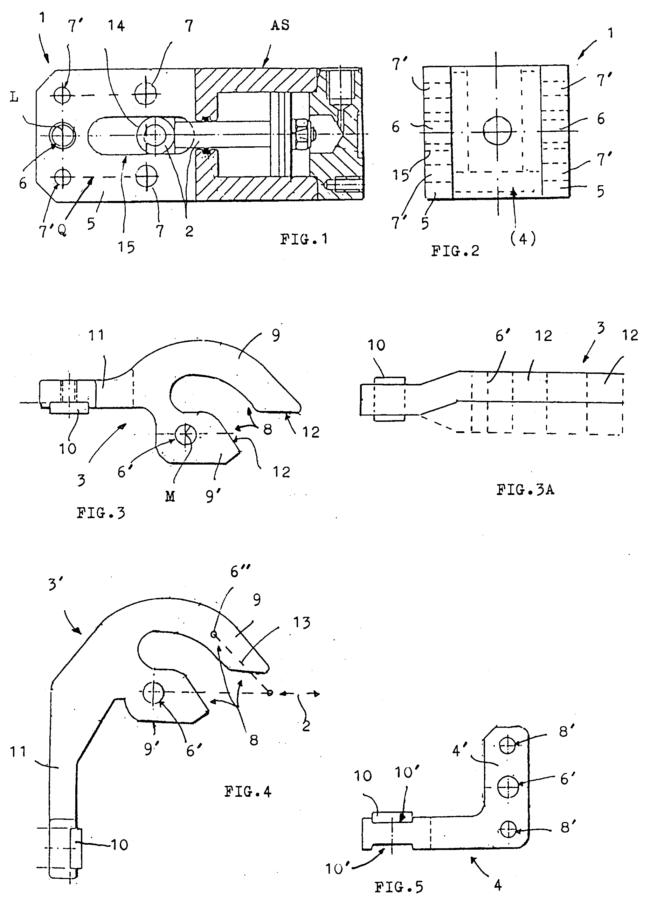

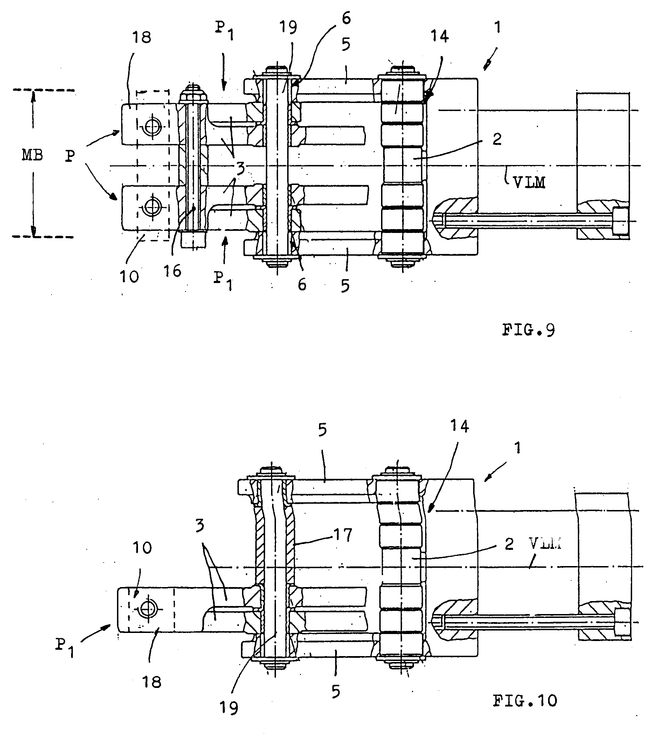

Die Betriebsmittelanschlußseite der Gesamtvorrichtung ist mit AS bezeichnet. Davon ausgehend ergeben sich also aufgrund der Lochrasteranordnung und der Ausbildung des Klemmbackenträgers 4 insgesamt vier Anordnungsmöglichkeiten A - D. Bei der Ausführungsform nach Fig. 6 wird dem Klemmbackenträger 4 der Klemmbackenträger 3 gemäß Fig. 3, 3A zugeordnet, der, wie aus dieser ersichtlich, in Form einer Gabel mit die Klemmbacke 10 tragenden Fortsatz 11 ausgebildet ist, wobei die Mittel 8 als die Enden der Gabelschenkel in Form von Stellgliedauflaufflächen 12 ausgebildet sind und im Schenkel 9' die zur Lagerbohrung 6 des Halters 1 fluchtende Bohrung 6' angeordnet ist. Dieser Klemmbackenträger 3 ist, egal ob der Klemmbackenträger 4 in Stellung A oder D sitzt, auf einem in der Lagerbohrung 6 sitzenden Querbolzen 19 (siehe Fig. 9, 10) gelagert. Der Befestigungsschenkel 4' des Klemmbackenträgers 4 ist dabei nicht im Wege, da dieser die zur Lagerbohrung 6 fluchtende und entsprechend bemessene Bohrung 6' aufweist. Ein solcher Klemmbackenträger 4 kann aber auch ohne geändert werden zu müssen in Stellungen B C gemäß Fig. 8 am Klemmbackenhalter 1 angeordnet werden. Hierbei muß jedoch der Klemmbackenträger 3 gemäß Fig. 3 im Sinne der Fig. 4 eine etwas andere Form haben, d.h., der die Klemmbacke 10 tragende Fortsatz 11 ist parallel zur Verbindungslinie L der beiden klemmbackenseitigen Bohrungen 7' angeordnet. In den Stellungen B, C der Klemmbackenträgers 4 dienen die Bohrung 7, 7' zu dessen Fixierung, während in Stellungen A (D) jeweils zwei Bohrungen 7' in Anspruch genommen werden. Da bei Anordnungen gemäß Fig. 8 die Lagerbohrung 6 am Klemmbackenhalter 1 per se freigestellt bleibt, verliert hierbei die Bohrung 6' im Schenkel 4' des Klemmbackenträgers 4 ihre Bedeutung.

Ebenfalls ohne etwas am Klemmbackenhalter 1 ändern zu müssen und unter Verwendung zweier Klemmbackenträger 3 gemäß Fig. 3 wie vorbeschrieben, kann die Vorrichtung aber auch gemäß Fig. 7 und 3A mit zwei zueinander beweglichen Klemmbackenträgern 3 ausgerüstet werden. Abgesehen von einer später noch zu beschreibenden besonderen Ausführungsform der Vorrichtung sind die Klemmbackenträger 3 (dies gilt auch für den Festbackenträger 4), wie aus Fig. 3A ersichtlich, zur vertikalen Längsmittelebene VLM hin abgekröpft.

Bei den in Fig. 6 - 8 dargestellten Ausführungsformen der Vorrichtung wird die Verstellung der beweglich gelagerten Klemmbackenträger 3 dadurch bewirkt, daß das zweckmäßig mit kleinen Rollen 14 versehene Ende des Stellgliedes 2 gegen die Auflaufflächen 12 gefahren wird. Das Auflaufen der Rolle 14 auf die stark geneigte Auflauffläche 12 am Schenkel 9' bewirkt dabei das Öffnen, und beim Rückzugsauflauf auf die nur schwach geneigte Auflauffläche 12 am Schenkel 9 wird der betreffende Klemmbackenträger 3 in Schließ- bzw. Klemmstellung gebracht.

Möglich ist aber auch eine kraft- und formschlüssige Verbindung zwischen Klemmbackenträger 3 und Stellglied 2 durch ein in Fig. 4 gestrichelt angedeutetes Zwischenglied 13. Hierbei werden jedoch die Wirkrichtungen des Antriebes für das Stellglied 2 umgekehrt wirksam. Das Ende des Stellgliedes 2 wird im übrigen zweckmäßig und in bekannter Weise längs der Mittellängslinie LM in Schlitzen 15 in den Schenkeln 5 des Klemmbackenhalters 1 geführt, wofür die Querachse für die kleinen Rollen 14 beidseitig entsprechend verlängert und deren Enden ggf. mit entsprechenden kleineren Führungsrollen versehen sein können.

Bevorzugt wird eine Ausführungsform der Vorrichtung nach den Fig. 9, 10, wobei die Maulbreite MB des Klemmbackenhalters 1, wie ersichtlich, wesentlich breiter bemessen ist, so daß Klemmbackenpaare P₁ angeordnet werden können. Dargestellt sind dabei Ausführungsformen mit schwenkbar auf einem Querbolzen 19 gelagerten Klemmbackenträgern 3, d.h., es sind insgesamt vier Klemmbackenträger 3 vorhanden, deren Form im Prinzip der in Fig. 3 dargestellten Ausführungsform entspricht. Die parallel einander zugeordneten Klemmbackenträger 3 eines Paares P sind dabei zur Querverbindung durch die jeweilige Klemmbacke 10 und zusätzlich durch einen Querbolzen 16, wie in Fig. 9 dargestellt, verbunden.

Auf dem Stellglied 2 sind ferner bei dieser Ausführungsform insgesamt sechs Rollen 14 angeordnet, wobei die jeweils äußere im Schlitz 15 (Fig. 1) des Halters 1 geführt ist, die mittlere auf die Auflaufflächen 12 des unteren und die innere auf die des oberen Klemmbackenträgers 3 wirkt. Hierbei sind die Klemmbackenträger 3 auch nicht seitlich abgekröpft, sondern, wie dargestellt, hammerkopfartig ausgebildet. Abgesehen von der Symmetrie zur vertikalen Längsmittelebene VLM können hierbei die eigentlichen Klemmbacken 10 entsprechend breit bemessen werden. Außerdem ergibt sich hierdurch eine weitere Variationsmöglichkeit, nämlich dahingehend, daß, falls nur eine relativ enge Zugriffsmöglichkeit für zu erfassende Bleche gegeben ist, nur auf einer Seite des Halters 1, wie in Fig. 10 verdeutlicht, ein Klemmbackenträgerpaar P₁ angeordnet werden kann, wobei anstelle des anderen Paares P₂ eine Distanzhülse 17 auf dem Querbolzen 19 angeordnet wird. Die anderen, vorbeschriebenen Varianten mit festen Klemmbackenträgern 4 sind hierbei natürlich auch möglich. Im übrigen sind die Bohrungen 8' an den Festklemmbackenträgern 4 gemäß Fig. 5 als Gewindebohrungen ausgebildet, so daß diese Festbackenträger 4 mit von außen durch die Bohrungen 7, 7' eingeführten Schrauben 20 innen an den Schenkeln 5 des Halters 1, wie aus Fig. 2 ersichtlich, fixiert werden können. Die Schrauben 20 sind dabei in ihrer Länge so bemessen, daß sie innen nicht über die Festbackenträger 4 herausragen.

## Patentansprüche

1. Klemmspannsystem, bestehend aus einem gabelförmigen Klemmbackenhalter (1), in dem ein in dessen Längserstreckung hin und her bewegliches Stellglied (2) für die Relativbewegung von zwei Klemmbackenträgern (3, 4) in Klemm- und Öffnungsstellung zueinander angeordnet ist, wobei in den beiden Schenkeln (5) des Klemmbackenhalters (1) zur Anbringung des entweder aus zwei beweglichen Klemmbackenträgern (3) oder aus einem beweglichen (3) und einem feststehenden Klemmbackenträger (4) gebildeten Klemmbackenträgerpaares mehrere in den Schenkeln (5) quer zueinander fluchtende Bohrungen beidseitig zur Längsmitte (LM) der Klemmspannvorrichtung angeordnet sind,
**dadurch gekennzeichnet,**
daß die Bohrungen in den Schenkeln (5) des Klemmbackenhalters (1) zu viert mit ihren Zentren (Z) auf den Ecken (E) eines Quadrates (Q) angeordnet sind, wobei mittig auf der Verbindungsgeraden (L) der beiden vorn am Klemmbackenhalter (1) angeordneten Bohrungen (7') in jedem der Schenkel (5) und zueinander fluchtend eine Lagerbohrung (6) angeordnet und jeder der beiden Klemmbackenträger (3, 4) mit einer entsprechenden Lagerbohrung (6') versehen ist,
daß der feststehende Klemmbackenträger (4) in Form eines Winkelstückes ausgebildet ist, in dessen Befestigungsschenkel (4') die zur Lagerbohrung (6) fluchtende Bohrung (6') und beidseitig neben dieser Bohrungen (8') angeordnet sind, deren Abstand zueinander den Abständen der Bohrungen (7') im Klemmbackenhalter (1) entspricht, und
daß der bzw. die beweglichen Klemmbackenträger (3) in Form einer Gabel mit die Klemmbacke tragenden Fortsatz (11) ausgebildet ist, wobei in einem der Gabelschenkel (9, 9') die zur Lagerbohrung (6) des Halters (1) fluchtende Bohrung (6') angeordnet ist, und daß beide Gabelschenkel (9, 9') einen kreisbogenförmigen Bolzendurchgriff begrenzen.

2. Klemmspannsystem nach Anspruch 1,
dadurch gekennzeichnet,
daß der Klemmbackenträger(4) beidseitig mit Klemmbackeneinsatzausnehmungen (10') versehen ist.

3. Klemmspannsystem nach Anspruch 1 oder 2,
dadurch gekennzeichnet,
daß die Enden der Gabelschenkel (9,9') als Stellgliedauflaufflächen (12) ausgebildet sind.

4. Klemmspannsystem nach Anspruch 3,
dadurch gekennzeichnet,
daß der die Klemmbacke (10) tragende Fortsatz (11) parallel oder geneigt zur Verbindungslinie (L) der beiden klemmbackerseitigen Bohrungen (7') angeordnet sind.

5. Klemmspannsystem nach Anspruch 1 oder 2,
dadurch gekennzeichnet,
daß im Gabelschenkel (9) eine Bohrung (6'') angeordnet ist, an der ein mit dem Ende des Stellgliedes (2) verbundenes Zwischenglied (13) angelenkt ist (Fig.4).

6. Klemmspannsystem nach einem der Ansprüche 1 bis 5,
dadurch gekennzeichnet,
daß die Klemmbackenträger (3,3',4) oben und unten paarweise im eine entsprechende Maulbreite(MB) aufweisenden Klemmbackenhalter (1) angeordnet sind, wobei jedes Paar (P ) mindestens durch die jeweilige Klemmbacke (10) quer verbunden ist.

7. Klemmspannsystem nach Anspruch 6,
dadurch gekennzeichnet,
daß die schwenkbaren Klemmbackenträger (3,3') mit einem Querbolzen (16) verbunden sind.

8. Klemmspannsystem nach Anspruch 6,
dadurch gekennzeichnet,
daß im entsprechend breit bemessenen Klemmbackenhalter (1) anstelle der Paarungen auf einer Seite eine auswechselbare Distanzhülse (17) angeordnet ist.

9. Klemmspannsystem nach einem der Ansprüche 6 bis 8,
dadurch gekennzeichnet,
daß die Klemmbackenträger (3,3') an ihren die Klemmbacken (10) tragenden Enden (18) hammerkopfartig ausgebildet sind.

## Claims

1. A clamping system comprising a fork-type clamping jaw holder (1) in which is arranged a control element (2) reciprocable in the longitudinal extension thereof and controlling the relative movement of two clamping jaw carriers (3,4) in the clamping and opening positions with respect to one another, with a plurality of bores in registry in the transverse direction within the legs (5) on either side toward the longitudinal center (LM) of the clamping system being arranged within the two legs (5) of the clamping jaw holder (1) for mounting the pair of clamping jaw carriers either formed of two movable clamping jaw carriers (3) or of one movable (3) and one stationary clamping jaw carrier, characterized in that four bores within the legs (5) of the clamping jaw holder (1) are arranged with their centers (Z) on corners (E) of a square (Q), with a bearing bore (6) being arranged centrally on the line of connection (L) of the two bores (7') arranged to the front of the clamping jaw holder (1) in each of the legs (5) and in registry with one another, and with each of the two clamping jaw carriers (3,4) being provided with a corresponding bearing bore (6'), that the stationary clamping jaw carrier (4) is in the form of an angle plate in the mounting angle (4') of which are arranged the bore (6') in registry with the bearing bore (6) and bores (8') on both sides in side-by-side relationship therewith, with the spaces therebetween corresponding to the spaces between the bores (7') in the clamping jaw holder (1), and that the movable clamping jaw carrier(s) (3) are in the form of a fork having an extension (11) carrying the clamping jaw, with the bore (6') in registry with the bearing bore (6) of holder (1) being arranged in one of the fork legs (9,9'), and that both fork legs (9,9') confine a circular arc-shaped bolt passage.

2. A clamping system according to claim 1, characterized in that the clamping jaw carrier (4) on both sides thereof is provided with clamping jaw insert recesses (10).

3. A clamping system according to claims 1 or 2, characterized in that the ends of the fork legs (9,9') are designed as bearing faces (12) for the control element.

4. A clamping system according to claim 3, characterized in that the extension (11) carrying the clamping jaw (10) is arranged in parallel to or at an inclination to the line of connection (L) of the two bores (7') arranged on the side of the clamping jaws.

5. A clamping system according to claims 1 or 2, characterized in that arranged in the fork leg (9) is a bore (6'') to which is hinged an intermediate element (13) connected to the end of the control element (2) (Fig. 4).

6. A clamping system according to any one of claims 1 to 5, characterized in that the clamping jaw carriers (3,3',4), at the top and bottom, are arranged, in pairs, within the clamping jaw holder (1) having a corresponding jaw width (MB), with each pair (P) being transversely connected at least through the respective clamping jaw (10).

7. A clamping system according to claim 6, characterized in that the pivotable clamping jaw carriers (3,3') are connected to a transverse bolt (16).

8. A clamping system according to claim 6, characterized in that a replaceable spacer sleeve (17) in lieu of pairs is arranged on one side in the correspondingly dimensioned clamping jaw holder (1).

9. A clamping system according to any one of claims 6 to 8, characterized in that the clamping jaw carriers (3,3') at the ends (18) carrying the clamping jaws (10) are of a hammer head-type configuration.

## Revendications

1. Système de serrage par coïncement constitué par un support de mâchoires de serrage en forme de fourche (1) dans lequel est placé un vérin de réglage (2) mobile en va-et-vient dans le sens de l'extension longitudinale du support pour le mouvement relatif de deux consoles de mâchoires de serrage (3, 4) en position de serrage et d'ouverture l'une par rapport à l'autre, plusieurs forures alignées transversalement l'une par rapport à l'autre dans les montants (5) étant placées dans les deux montants (5) du support de mâchoires de serrage (1) pour la fixation de la paire de consoles de mâchoires de serrage formée soit par deux consoles mobiles de mâchoires de serrage (3), soit par une console mobile (3) et une console fixe de mâchoire de serrage (4) des deux côtés du milieu longitudinal (LM) du dispositif de serrage par coïncement,
caractérisé en ce
que les forures dans les montants (5) du support de mâchoires de serrage (1) sont placées à quatre avec leurs centres (Z) sur les coins (E) d'un carré (Q), une forure de palier (6) étant placée au milieu sur la droite de jonction (L) des deux forures (7') placées devant sur le support de mâchoires de serrage (1) dans chacun des montants (5) et alignée l'une par rapport à l'autre et chacune des deux consoles de mâchoires de serrage (3, 4) étant pourvue d'une forure correspondante de palier (6'),
que la console fixe de mâchoire de serrage (4) est configurée en forme de cornière dans le montant de fixation (4') de laquelle la forure (6'), qui est alignée sur la forure de palier (6) et des forures (8') sont placées des deux côtés à côté de celle-ci, forures dont l'écart l'une par rapport à l'autre correspond aux écarts des forures (7') dans le support de mâchoires de serrage (1) et
que la ou les consoles mobile(s) de mâchoires de serrage (3) est formée en forme de fourche avec un prolongement (11) qui porte la mâchoire de serrage, la forure (6') alignée sur la forure de palier (6) du support (1) étant placée dans l'un des montants de la fourche (9, 9') et que les deux montants de la fourche (9, 9') délimitent un passage de boulon en forme d'arc de cercle.

2. Système de serrage par concernent selon la revendication 1,
caractérisé en ce
que la console de mâchoire de serrage (4) est pourvue des deux côtés d'évidements d'insertion de mâchoires de serrage (10').

3. Système de serrage par coïncement selon la revendication 1 ou 2,
caractérisé en ce
que les extrémités des montants de la fourche (9, 9') sont configurées comme surfaces de contact du vérin de réglage (12).

4. Système de serrage par coïncement selon la revendication 3,
caractérisé en ce
que le prolongement (11) qui porte la mâchoire de serrage (10) est placé parallèlement ou de manière inclinée par rapport à la ligne de jonction (L) des deux forures (7') du côté des mâchoires de serrage.

5. Système de serrage par coïncement selon la revendication 1 ou 2,
caractérisé en ce
qu'une forure (6'') est placée dans le montant de fourche (9) sur lequel un élément intermédiaire (13), relié à l'extrémité du vérin de réglage (2), est articulé (figure 4).

6. Système de serrage par coïncement selon l'une des revendications 1 à 5,
caractérisé en ce
que les consoles de mâchoires de serrage (3, 3', 4) sont placées en haut et en bas par paires dans le support de mâchoires de serrage (1) présentant une largeur de mâchoire (MB) correspondante, chaque paire (P) étant reliée transversalement au moins par la mâchoire de serrage (10) respective.

7. Système de serrage par coïncement selon la revendication 6,
caractérisé en ce
que les consoles pivotantes de mâchoires de serrage (3, 3') sont reliées avec un boulon transversal (16).

8. Système de serrage par concernent selon la revendication 6,
caractérisé en ce
qu'une douille d'écartement (17) remplaçable est placée dans le support de mâchoires de serrage (1) dimensionné de largeur correspondante à la place des paires sur un côté.

9. Système de serrage par coïncement selon l'une des revendications 6 à 8,
caractérisé en ce
que les consoles de mâchoires de serrage (3, 3') sont configurées de type tête de marteau à leurs extrémités (18) qui portent les mâchoires de serrage (10).
